# EUROPEAN PATENT APPLICATION

(11) **EP 3 079 314 A1**
(43) Date of publication of application: **12.10.2016**
(21) Application number: 15305516.5
(22) Date of filing: 08.04.2015
(51) Int. Cl.: H04L 12/801, H04L 12/825, H04L 12/835

(54) **METHOD TO MANAGE RESOURCES, SYSTEM AND COMPUTER-READABLE MEDIUM**

(71) Applicant: ALCATEL LUCENT, 92100 Boulogne-Billancourt (FR)
(72) Inventor: Dobbelaere, Philippe, 2018 ANTWERP (BE); Cortes, Mauricio, MURRAY HILL, NJ New Jersey 07974-0636 (US)
(74) Representative: Berthier, Karine

(57) **Abstract**

Method, system and computer-readable medium dedicated to the management of resources associated to a plurality of computer modules implanted within a computer system, the resources of the plurality of computer modules being involved in the sequential processing of a data flow. The method comprises a step of detecting that a computer module, so called first computer module, is facing a buffer overflow, a step of determining another computer module, so called second computer module, involved of the processing of data flow prior to the first computer module. The method also comprises a step of sending by the first computer to the second computer module a message requesting to decrease the dataflow rate, and a step of decreasing the dataflow rate by the second computer module.

## Description

### FIELD OF INVENTION

The present subject matter relates to a method to manage the buffers or any other could be any scarce shared resource, for example network bandwidth, of a plurality of computer modules involved in the processing of the same data flow.

### BACKGROUND

A distributed dataflow processing system contains a lot of queues; also know by anyone ordinarily skilled in the art as buffer. These queues are respectively associated to a plurality of computer modules and the computer modules are involved in the processing of the same data flow. Each buffer needs to be managed so that the global performance of the system (also known as framework), or the performance for selected applications running on the framework is optimized. Since the load on buffers are related by the fact that particular dataflows always use the same sequence of buffers, understanding the dataflows through the framework is essential to be able to manage buffers on a global scale. Understanding where these dataflows enter the framework is critical to manage resource consumption when sources go beyond the rate that was negotiated at deployment time or to guard against Denial of Service attacks.

### SUMMARY

This summary is provided to introduce concepts related to the management of the buffers of a plurality of computer module involved in the processing of the same data flow.

In one implementation, a method is described. This method is dedicated to the management of resources associated to a plurality of computer modules implanted within a computer system, the said plurality of computer modules being involved in the sequential processing of a data flow. The method comprises a step of detecting that a computer module, so called first computer module, is facing a over usage of its resource, a step of determining another computer module, so called second computer module, involved of the processing of data flow prior to the first computer module. The method also comprises a step of sending by the first computer to the second computer module a message requesting to decrease the dataflow rate, and a step of decreasing the dataflow rate by the second computer module.

In another implementation, a system is described. The system is designed to process a data flow, the said data flow is processed by resources associated to a plurality of computer modules integrated within the system and that are involved in the sequential processing of the data flow. The system also comprises detection means to detect that a computer module, so called first computer module, is facing a over usage of its resource and determination means to determine a computer module, so called second computer module, involved of the processing of data flow prior to the first computer module. The system also comprises transmission means to send by the first computer to the second computer module a message requesting to decrease the dataflow rate, and configuration means to decrease the dataflow rate by the second computer module.

In another implementation a computer-readable medium is described. The computer-readable medium has embedded thereon a computer program configured to manage resources associated to a plurality of computer modules implanted within a computer system, the resources of the plurality of computer modules being involved in the sequential processing of a data flow. The computer program comprises a step of detecting that a computer module, so called first computer module, is facing a over usage of its resource, and a step of determining a computer module, so called second computer module, involved of the processing of data flow prior to the first computer module. The computer program also comprises a step of sending by the first computer to the second computer module a message requesting to decrease the dataflow rate and a step of decreasing the dataflow rate by the second computer module.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents a first embodiment of the method of the present subject matter
Figure 2 presents a second embodiment of the method of the present subject matter
Figure 3 presents a method to determine a sequential list of the computer modules involved in processing of a data flow
Figure 4 presents a system object of the present subject matter
Figure 5 presents a method to determine the predecessor of a given computer module

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

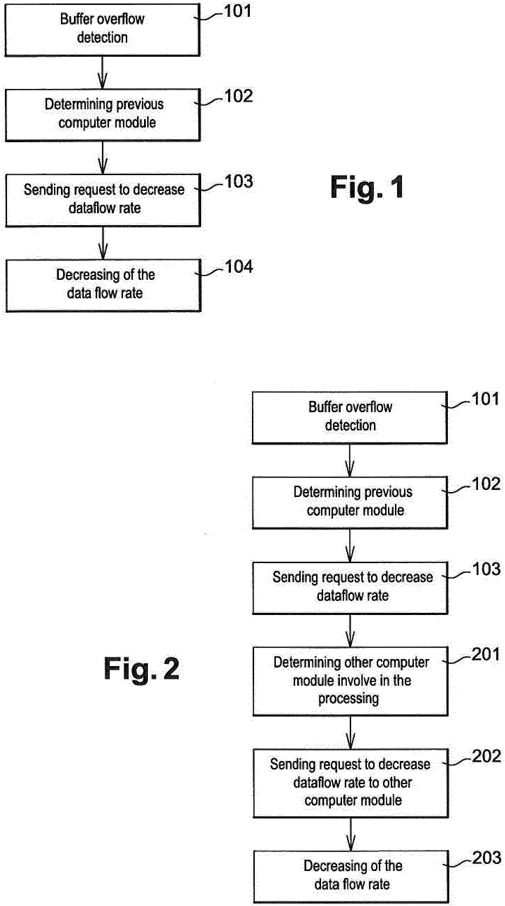

The figure 1 presents a first embodiment of the present subject matter. This method allows the management of resources associated to a plurality of computer modules implanted within a computer system. The resources of the computer modules are involved in the sequential processing of a data flow. The method comprises;
a step 101 of detecting that a computer module, so called first computer module, is facing a over usage of its resource,
a step 102 of determining another computer module, so called second computer module, involved of the processing of data flow prior to the first computer module,
a step 103 of sending by the first computer to the second computer module a message requesting to decrease the dataflow rate,
a step 104 of decreasing the dataflow rate by the second computer module.

In an embodiment the method is used to manage buffer overflow, and the resource associated to the computer modules are then the buffer and more precisely the number of elements within the buffer and the comparison of this number to the maximum number of elements stackable within the buffer. In this embodiment the step 101 of detecting that the first computer module, is facing a over usage of its resource is configured to detect the first computer module, is facing a buffer overflow. In another words, in this embodiment the computer modules are involved in the sequential processing of a data flow. The method comprises;
a step 101 of detecting that a computer module, so called first computer module, is facing a buffer overflow,
a step 102 of determining another computer module, so called second computer module, involved of the processing of data flow prior to the first computer module,
a step 103 of sending by the first computer to the second computer module a message requesting to decrease the dataflow rate,
a step 104 of decreasing the dataflow rate by the second computer module.

How the step 104 of decreasing the dataflow rate is realized depends on the cause of the message flow at that point. In an embodiment and if the cause is internal, the module can just decide on its own to send less packets (e.g. using a concept of aggregation / running mean where the number of samples used in the process can be modulated, and hence the ratio between number of data samples and resulting outputs that are to be sent into the stream). If the cause is external, the module can ask that external entity to decrease the rate. Since this will either not work at all or only after a certain period, the only action the module can do at that point is drop packets, preferably in a smart way so that at least some streams can reach the destination.

In another embodiment of the present subject matter the computer system comprises, associated to at least one date flow, a sequential list of the computer modules involved in processing of this data flow. In this embodiment, the step 102 of determination is configured to determine the second computer module as the one within the sequential list that is before the first computer module.

In another embodiment of the present subject matter the computer system comprises, associated to at least one date flow, a sequential list of the computer modules involved in processing of this data flow. In this embodiment, the step 102 of determination is configured to determine the second computer module as the computer module which is the first within the sequential list.

In another embodiment of the present subject matter, the step 101 of detection is configured to detect that the buffer associated to one of the computer module is exceeding a first predetermined threshold.

The figure 2 presents another embodiment of the present subject matter. In this embodiment the method to manage resource also realizes some other steps when a third computer module receives a request to decrease the dataflow rate and if a buffer associated to the third computer module exceeds a second predetermined threshold. If the previous conditions are reached the method realizes a further step 201 of determining a computer module, so called forth computer module, involved with the processing of data flow prior to the third computer module and a further step 202 of sending from the third computer to the forth computer module a message requesting to decrease the dataflow rate. After that the method comprises a further step 203 of decreasing the dataflow rate by the fourth computer module.

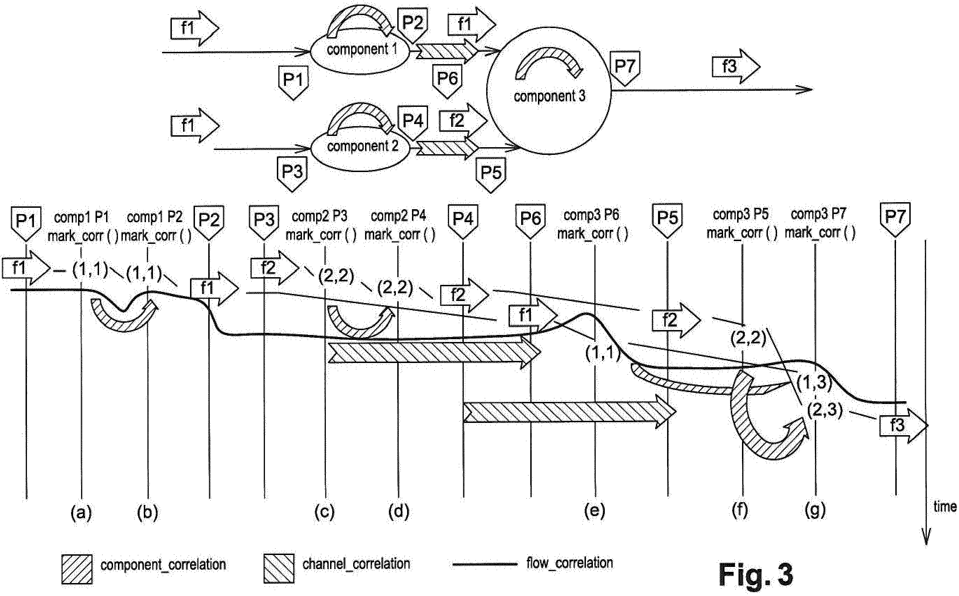

In an embodiment the sequential list of the computer modules involved in processing of this data flow is obtained by using the method described figure 3.

| **timestamp** | **component** | **port** | **flowID** | **correlation** | **remark** |
|---|---|---|---|---|---|
| -1 | comp1 | P1 | 123 | | no outgoing message |
| 0 | comp1 | P1 | **1** | -+ | [a] f1 enters through P1 |
| 1 | comp1 | P1 | 456 | \| | not shown on drawing, other flow |
| 2 | comp2 | P3 | **2** | \| -+ | [c] f2 enters through P3 |
| 3 | comp1 | P2 | **1** | -+ \| -+ | [b] f1 leaves through P2 |
| 4 | comp2 | P4 | **2** | -+ \| -+ | [d] f2 leaves through P4 |
| 5 | comp3 | P6 | **1** | -+ -+ \| | [e] f1 enters through P6 |
| 6 | comp3 | P5 | **2** | \| -+ -+ | [f] f2 enters through P5 |
| 7 | comp3 | P7 | **1** | -+ \| | [g] f1 and f2 trigger outgoing message, will get flowID 3. |
| | | | | \| | |
| | | | | | this entry logs the contribution of f 1 |
| | comp3 | P7 | **2** | -+ | [g] this entry logs the contribution of f2 |
| | comp3 | P7 | 3 | | [g] flowID change marked up as final write into table |

The above table presents the result of the method of figure 3. This method is based on dataflow correlation and is a succession of component correlation and channel correlation steps.

The component correlation steps associates output ports on a component for example a computer module with input ports on that component that are used by the same dataflow. This works by looking back in time on the same component for an input port that has the same flowid as is observed on an output port (for example in the previous table, timestamp 3 looking back to timestamp 0).

The channel correlation step associates input ports of a component with an output port of the component that is at the sourcing side of the channel towards our input component. This works by looking back in time on the same channel for an output port that has the same flowid, associated to a dataflow, as is observed on this input port (for example in the previous table, timestamp 5 looking back to timestamp 3).

Unless merge points occur, the flowid_in and flowid_out on mark_correlator can be identical. In case of a merging point, flowid_out cannot be at the same time equal to flowid_in1 and flowid_in2 so there we need to rename the flowid and at the same time this modification is logged in the table presented above (timestamp 7: f1 in 1, f2 in 2, merge out 3)

So by using the above presented method and the method object of the different embodiments we can do a global buffer management in a way that is minimally intrusive to the performance of the framework and the design effort for the components used in applications deployed on that framework.

In other words, the method of the present subject matter allows a particular level of service, to be guaranteed, to the external users of the applications associated to the data flow that are deployed. This service might be compromised due to inefficient scheduling of the worker threads over the ingress queues, some external datasources that start sending more than the application was provisioned for or even a real Denial of Service attack.

The worker thread scheduling is unrelated to the flow mechanism and will be handled elsewhere. Service degradation due to too many incoming requests however can be mitigated based on flow logic.

First of all, by monitoring the ingress port queue levels, we can detect which internal ports are getting too many requests. Since these queues cannot grow indefinitely, we need to start dropping requests. When this happens deep inside the application dataflow, the dropped requests have already consumed processing resources in upstream components. This is a waste of resources, and needs to be avoided.

Ideally, we want to follow the flows leading into this stressed queue upstream, applying backpressure along the way, and ultimately prevent these flows from entering above expected message rate at the boundary of our system.

A possible approach would be to add descriptive logic to all components expressing how output ports need to be traced back to input ports so as to allow these flows to be followed in the upstream direction. This poses two problems: it seriously complicates the job of a component designer, and might even be pretty hard to do at a descriptive level if the component logic is based on a complicated state machine.

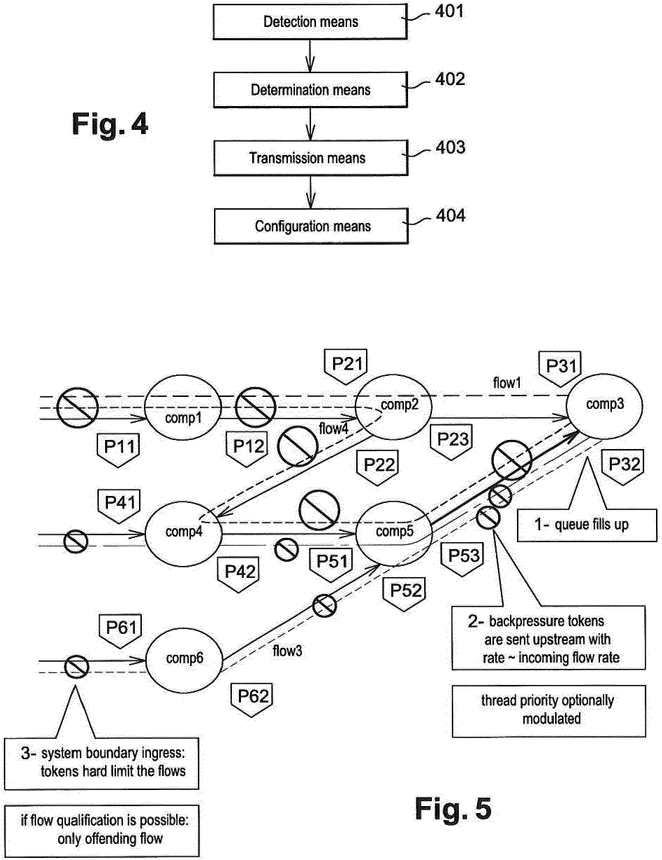

The flow logging described in figure 5 provides a much better solution, since it allows us to automatically detect flows across the components, while the needed actions on the part of the component designer are limited to calls to the mark_correlator() function at the appropriate places of the normal message handling code.

Assume the ingress queue of P32 fills up. For each message above queue threshold we start sending backpressure tokens in the upstream direction of the flows as indicated by the flow ID's arriving at P32. This does not require any processing beyond the component_correlation which was already part of the processing described above. In the example, flow4 carries many messages. Flow1, flow2 and flow3 are low rate. By construction, the backpressure flow for flow4 will be much larger than for flows 1, 2 and 3.

Along the way, these backpressure tokens can optionally be used to modulate the thread scheduler serving the queues, so that queues that receive backpressure tokens will be served less often - this will spread out the messages over all queues along the flow and will reduce peak queue sizes in the system. It will however also slow down handling for other flows passing over some of these queues - it needs to be decided on a framework global level if this makes sense or not. In a best effort configuration, slowing down the threads will make sure the system as a whole has better performance. In a guaranteed latency configuration, threads serving applications that need guaranteed latency should not be lowered in priority due to backpressure tokens coming in from other flows using the same queue (i.e. port, channel).

These backpressure tokens finally reach the boundary ingress ports of the source of the dataflow P11, P41 and P61. There, the tokens are converted to an actual backpressure action, with strength proportional to the rate of incoming backpressure tokens. As a consequence, flow2 and flow3 are only minimally throttled. Since at P11 which receives the most backpressure tokens flow1 and flow4 cannot be disambiguated, both will be seriously throttled. For flow4, this is exactly the appropriate action which will fix the overflow of P32. For flow1, this is an unfortunate side effect. It would be avoided if, just as for flow2 and flow3, flow1 would enter through a ingress port of its own.

Alternatively, if by some learning mechanism it would become possible to correlate a message filter to the flow ID's that carry the backpressure tokens, P11 could selectively backpressure flow4 proportional to the tokens associated to flow4 and likewise for flow1 - now flow1 would be fairly treated just as was already the case for flow2 and flow3.

A possible arrangement for that learning mechanism is the following:
On reception of backpressure tokens at the ingress interface, messages arriving at that interface are copied to a slow path cluster analysis engine. The engine uses the data fields as defined in the incoming messages (in the case of the present subject matter, all messages are syntactically typed by a schema - in absence of a schema, it is always possible to consider the individual bytes as single data fields for the clustering algorithm). The engine is trained to recognize a combination of data fields that have a high probability of belonging to a message of the flow that is associated to the backpressure tokens (this information will become available when the messages propagate through the dataflow and ultimately reach the congestion point, or not). Additionally, transport or session level information (e.g. for TCP, originating IP address, originating MAC address,... for HTTP, authentication or session information,...) can be taken into account. If the engine finds a data field pattern that has a high probability of belonging to the congested flow, selective backpressure of these data field patterns becomes possible. If not, the complete interface needs to be backpressured regardless of the data carried in the messages. An example of a clustering algorithm that would be useable in this setting is a neural network with input synapses connected to the datafields, and output synapses connected to an enumeration of the different flows entering through this interface.

When the backpressure tokens fall away, the throttling of the boundary ingress ports should also stop. This can e.g. be accomplished by means of a leaky bucket infrastructure, where the bucket is filled with a particular rate, emptied by incoming messages and additionally with a rate proportional to the backpressure token rate. This would allow setting a sustainable ingress rate per port, modulated appropriately by our backpressure mechanism.

The boundaries can be implemented in a variety of interface technologies:
- the external world could use the backpressure mechanism which is part of the streaming abstraction used at that interface (e.g TCP: windowing mechanism with ACKs)
- the external world could use HTTP, in which case we can backpressure by sending a status forbidden on the requests that target the URI at the source of the congestion
- any other technology would need the mechanisms available to that technology to deny messages from entering our system above acceptable rate.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter is a computer program, configured to realize the method, described figure 1. This method allows the management of resources associated to a plurality of computer modules implanted within a computer system. The computer modules are involved in the sequential processing of a data flow. The computer program comprises;
a step 101 of detecting that a computer module, so called first computer module, is facing a over usage of its resource,
a step 102 of determining another computer module, so called second computer module, involved of the processing of data flow prior to the first computer module,
a step 103 of sending by the first computer to the second computer module a message requesting to decrease the dataflow rate, a step 104 of decreasing the dataflow rate by the second computer module.

In an embodiment a computer-readable medium having embedded thereon a computer program described in the previous section is proposed.

In an embodiment the method is used to manage buffer overflow, and the resource associated to the computer modules are then the buffer. In this embodiment the step 101 of detecting that the first computer module, is facing a over usage of its resource is configured to detect the first computer module, is facing a buffer overflow.

How the step 104 of decreasing the dataflow rate is realized depends on the cause of the message flow at that point. In an embodiment and if the cause is internal, the module can just decide on its own to send less packets (e.g. using a concept of aggregation / running mean where the number of samples used in the process can be modulated, and hence the ratio between number of data samples and resulting outputs that are to be sent into the stream). If the cause is external, the module can ask that external entity to decrease the rate. Since this will either not work at all or only after a certain period, the only action the module can do at that point is drop packets, preferably in a smart way so that at least some streams can reach the destination.

In another embodiment of the present subject matter the computer system comprises, associated to at least one date flow, a sequential list of the computer modules involved in processing of this data flow. In this embodiment, the computer program is configured to realize the method of figure 1 wherein, the step 102 of determination is configured to determine the second computer module as the one within the sequential list that is before the first computer module.

In another embodiment of the present subject matter the computer system comprises, associated to at least one date flow, a sequential list of the computer modules involved in processing of this data flow. In this embodiment, the computer program is configured to realize the method of figure 1 wherein, the step 102 of determination is configured to determine the second computer module as the computer module which is the first within the sequential list.

In another embodiment of the present subject matter, the computer program is configured to realize the method of figure 1 wherein, the step 101 of detection is configured to detect that the buffer associated to one of the computer module is exceeding a first predetermined threshold.

An embodiment of the subject matter is a computer program, configured to realize the method, described figure 2. This method allows the management of buffer overflow in a plurality of computer modules implanted within a computer system. In this embodiment the computer program is configured to realize the method to manage buffer overflow which also comprises some other steps. These steps are realized when a third computer module receives a request to decrease the dataflow rate and if a buffer associated to the third computer module exceeds a second predetermined threshold. If the previous conditions are reached the method realizes a further step 201 of determining a computer module, so called forth computer module, involved of the processing of data flow prior to the third computer module and a further step 202 of sending by the third computer to the forth computer module a message requesting to decrease the dataflow rate. After that the method comprises a further step 203 of decreasing the dataflow rate by the forth computer module.

An embodiment of the present subject matter is a system. This system comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

The system is described figure 4 and is configured to process a data flow. This processing is handled by resources associated to a plurality of computer modules that are involved in the sequential processing of a data flow. The system is configured to manage buffer overflow of the different computer modules implanted within the computer system. The system comprises;
Detection means 401 to detect that a computer module, so called first computer module, is facing a over usage of its resource
Determination means 402 to determine another computer module, so called second computer module, involved of the processing of data flow prior to the first computer module,
Transmission means 403 to send by the first computer to the second computer module a message requesting to decrease the dataflow rate,
Configuration means 404 to decrease the dataflow rate by the second computer module.

## Claims

1. Method to manage resources associated to a plurality of computer modules implanted within a computer system, the said resources of the plurality of computer modules being involved in the sequential processing of a data flow, the method comprising;
a step (101) of detecting that a computer module, so called first computer module, is facing a over usage of its resource,
a step (102) of determining another computer module, so called second computer module, involved of the processing of data flow prior to the first computer module,
a step (103) of sending by the first computer to the second computer module a message requesting to decrease the dataflow rate,
a step (104) of decreasing the dataflow rate by the second computer module.

2. Method to manage resources according to claim 1 wherein
the said computer system comprises, associated to at least one date flow, a sequential list of the computer modules involved in processing of this data flow,
the step (102) of determination is configured to determine the second computer module as the one within the sequential list that is before the first computer module.

3. Method to manage resources according to claim 1 wherein
the said computer system comprises, associated to at least one date flow, a sequential list of the computer modules involved in processing of this data flow,
the step (102) of determination is configured to determine the second computer module as the computer module which is the first within the sequential list.

4. Method to manage resources according to any of the previous claims wherein the resources are buffers associated to the plurality of computer modules, and the step (101) of detecting that the first computer module, is facing a over usage of its resource is configured to detect the first computer module, is facing a buffer overflow.

5. Method to manage resources according to any of the previous claims wherein,
the step (101) of detection is configured to detect that the buffer associated to one of the computer modules is exceeding a first predetermined threshold.

6. Method to manage resources according to any of the previous claims also comprising the following steps, realized when a third computer module receives a request to decrease the dataflow rate and if a buffer associated to the third computer module exceeds a second predetermined threshold
a further step (201) of determining a computer module, so called fourth computer module, involved of the processing of data flow prior to the third computer module and
a further step (202) of sending by the third computer to the fourth computer module a message requesting to decrease the dataflow rate,
a further step (203) of decreasing the dataflow rate by the fourth computer module.

7. System to process a data flow, the said data flow is processed by resources associated to a plurality of computer modules integrated within the system and that are involved in the sequential processing of the data flow, the said system also comprises;
detection means (401) to detect that a computer module, so called first computer module, is facing a over usage of its resource,
determination means (402) to determine a computer module, so called second computer module, involved of the processing of data flow prior to the first computer module,
transmission means (403) to send by the first computer to the second computer module a message requesting to decrease the dataflow rate, and
configuration means (404) to decrease the dataflow rate by the second computer module.

8. A computer-readable medium having embedded thereon a computer program configured to manage resources associated to a plurality of computer modules implanted within a computer system, the resources of the plurality of computer modules being involved in the sequential processing of a data flown, the computer program comprising;
a step (101) of detecting that a computer module, so called first computer module, is facing a over usage of its resource,
a step (102) of determining a computer module, so called second computer module, involved of the processing of data flow prior to the first computer module,
a step (103) of sending by the first computer to the second computer module a message requesting to decrease the dataflow rate,
a step (104) of decreasing the dataflow rate by the second computer module.

## Amended claims

### Amended claims in accordance with Rule 137(2) EPC.

1. Method to manage resources associated to a plurality of computer modules implanted within a computer system, the said resources of the plurality of computer modules being involved in a sequential processing of a data flow, the method comprising;
a step (101) of detecting that a computer module, so called first computer module, is facing an over usage of its resource,
a step (102) of determining another computer module, so called second computer module, involved in the processing of the data flow prior to the first computer module,
a step (103) of sending by the first computer to the second computer module a message requesting to decrease a dataflow rate,
a step (104) of decreasing the dataflow rate by the second computer module.

2. Method to manage resources according to claim 1 wherein
the said computer system comprises, associated to at least one data flow, a sequential list of the computer modules involved in processing of this data flow,
the step (102) of determination is configured to determine the second computer module as the one within the sequential list that is before the first computer module.

3. Method to manage resources according to claim 1 wherein
the said computer system comprises, associated to at least one data flow, a sequential list of the computer modules involved in processing of this data flow,
the step (102) of determination is configured to determine the second computer module as the computer module which is the first within the sequential list.

4. Method to manage resources according to any of the previous claims wherein the resources are buffers associated to the plurality of computer modules, and the step (101) of detecting that the first computer module, is facing an over usage of its resource is configured to detect the first computer module, is facing a buffer overflow.

5. Method to manage resources according to the claim 4 wherein,
the step (101) of detection is configured to detect that the buffer associated to one of the computer modules is exceeding a first predetermined threshold.

6. Method to manage resources according to any of the previous claims also comprising the following steps, realized when a third computer module receives a request to decrease the dataflow rate and if a buffer associated to the third computer module exceeds a second predetermined threshold
a further step (201) of determining a computer module, so called fourth computer module, involved of the processing of data flow prior to the third computer module and
a further step (202) of sending by the third computer to the fourth computer module a message requesting to decrease the dataflow rate,
a further step (203) of decreasing the dataflow rate by the fourth computer module.

7. System to process a data flow, the said data flow is processed by resources associated to a plurality of computer modules integrated within the system and that are involved in a sequential processing of the data flow, the said system also comprises;
detection means (401) to detect that a computer module, so called first computer module, is facing an over usage of its resource,
determination means (402) to determine a computer module, so called second computer module, involved in the processing of the data flow prior to the first computer module,
transmission means (403) to send by the first computer to the second computer module a message requesting to decrease a dataflow rate, and
configuration means (404) to decrease the dataflow rate by the second computer module.

8. A computer-readable medium having embedded thereon a computer program configured to manage resources associated to a plurality of computer modules implanted within a computer system, the resources of the plurality of computer modules being involved in a sequential processing of a data flown, the computer program comprising;
a step (101) of detecting that a computer module, so called first computer module, is facing an over usage of its resource,
a step (102) of determining a computer module, so called second computer module, involved in the processing of the data flow prior to the first computer module,
a step (103) of sending by the first computer to the second computer module a message requesting to decrease a dataflow rate,
a step (104) of decreasing the dataflow rate by the second computer module.
